(19) **Europäisches Patentamt**

**European Patent Office**

**Office européen des brevets**

(11) **EP 1 130 795 A2**

(12) **EUROPÄISCHE PATENTANMELDUNG**

(43) Veröffentlichungstag:
**05.09.2001 Patentblatt 2001/36**

(51) Int Cl.⁷: **H04B 3/23**

(21) Anmeldenummer: **00440297.0**

(22) Anmeldetag: **16.11.2000**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **14.12.1999 DE 19960051**

(71) Anmelder: **ALCATEL**
**75008 Paris (FR)**

(72) Erfinder: **Maurer, Michael**
**71336 Waiblingen (DE)**

(74) Vertreter: **Giebel-Roder, Marion et al**
**Alcatel**
**Intellectual Property Department, Stuttgart**
**70430 Stuttgart (DE)**

(54) **Verfahren und Vorrichtung zur Echounterdrückung in einem Telekommunikationssystem**

(57) Die Erfindung betrifft ein Verfahren zur Echounterdrückung in einem Telekommunikationssystem, bei dem ein Informationsaustausch zwischen einem lokalen Teilnehmer (X) und einem Teilnehmer (Y) am fernen Ende einer Übertragungsstrecke erfolgt und mindestens einem Teilnehmer (X) eine Echounterdrückungseinrichtung (5) zugeordnet ist, deren Parameter unter anderem als Funktion einer Echolaufzeit (i) eingestellt werden. Ein besonders einfaches und zuverlässiges Verfahren dieser Art ist dadurch gekennzeichnet, dass aus dem von einem Teilnehmer (X) gesendeten Signal (x(t)) und dem bei dem Teilnehmer (X) empfangenen Signal (y(t)) in äquidistanten zeitlichen Abständen ($T_l$) die Vorzeichen ermittelt werden, sodass Vorzeichen-Folgen ($x_i$, $y_i$) entstehen, die gespeichert und miteinander verglichen werden und dass bei direkter oder durch Invertierung entstehender Übereinstimmung ($x_i = y_i$ oder $x_i = \bar{y}_i$) der Vorzeichen-Folgen ($x_i$, $y_i$) des empfangenen Signals (y(t)) mit dem gesendeten Signal (x(t)) das empfangene Signal (y(t)) als Echo erkannt wird und die Echolaufzeit (i) berechnet wird.

Fig.2

EP 1 130 795 A2

**Beschreibung**

Die Erfindung betrifft ein Verfahren zur Echounterdrückung in einem Telekommunikationssystem, bei dem ein Informationsaustausch zwischen einem lokalen Teilnehmer und einem Teilnehmer am fernen Ende einer Übertragungsstrecke erfolgt und mindestens einem Teilnehmer eine Echounterdrückungseinrichtung zugeordnet ist, deren Parameter unter anderem als Funktion einer Echolaufzeit eingestellt werden sowie eine Echounterdrückungseinrichtung zur Durchführung des Verfahrens.

Durch unerwünschte elektrische Kopplung zwischen einem Empfangspfad und einem Sendepfad können störende Echos, sogenannte Leitungsechos, entstehen. In der modernen Kommunikationstechnik stellen derartige Kopplungen beziehungsweise Echos aufgrund von Datenreduktionen, Stoßstellen, häufigen 2 Draht-4 Draht Übergängen usw. ein zunehmendes Problem dar. Um die Gesprächs- oder Datenverbindungen qualitativ zu verbessern, werden deshalb echounterdrückende Maßnahmen wie NLMS-Algorithmen oder Kompander-Algorithmen eingesetzt. Bei diesen Algorithmen ist es oft nützlich, Kenntnisse über die Laufzeit der Echosignale zu haben. Zur Ermittlung der Echolaufzeit muss festgestellt werden, wann das gesendete Signal am Echoempfangsort eintrifft. Da Telekommunikationssysteme im allgemeinen bidirektional betrieben werden, kann das Echosignal von einem Signal überlagert werden, das am fernen Ende der Übertragungsstrecke als Nutzsignal eingespeist wird. Dies trifft immer dann zu, wenn an beiden Enden der Übertragungstrecke gleichzeitig gesprochen wird. Das ist die sogenannte Gegensprechsituation. Es ist ein allgemeines Problem, bei allen möglichen Übertragungssituationen ein Echo klar zu identifizieren und von Nutzsignalen in der Gegensprechsituation zu unterscheiden.

Aus der DE-A-42 29 0110 ist ein Verfahren zur Erkennung eines Echos bekannt, bei dem das gesendete Signal aufgezeichnet und mit dem am Empfangsort ankommenden Signal verglichen wird. Dazu wird eine Korrelationsanalyse durchgeführt, wobei das Korrelationsmaß die Wahrscheinlichkeit angibt, ob ein Echo oder ein Mischsignal, hervorgerufen durch das Gegensprechen, vorliegt. Diese Entscheidung wird durch einen Schwellwert getroffen. Je größer der Schwellwert gewählt wird, desto seltener werden vorhandene Echos erkannt. Somit werden häufig Fehlentscheidungen getroffen. Wird andererseits der Schwellenwert zu klein gewählt, besteht die Gefahr, dass Nutzsignale im Gegensprechbetriebe herausgefiltert werden. Der Rechenaufwand für die Korrelationsanalyse ist sehr hoch und die Sicherheit, ein Echo zu erkennen, ist dennoch unbefriedigend.

Des weiteren ist aus der DE-A-19 85 0272 ein Verfahren zur Erkennung eines Echos bekannt, bei dem aus dem gesendeten Signal und dem empfangenen Signal lokale Extremwerte bestimmt werden. Da die Zeitdifferenz zwischen zwei lokalen Extremwerten von der Kurvenform des gesendeten Signals abhängig ist, ergibt sich bei dem gesendeten Signal und dem empfangenen Signal im Falle eines Echos die gleiche Zeitdifferenz zwischen aufeinanderfolgenden Extremwerten. Diese Extremwerte werden mit einem Impuls markiert, so dass sich Impulsfolgen ergeben, die ein Charakteristikum einer Sprachsequenz darstellen. Aus der Impulsfolge der lokalen Extremwerte des gesendeten Signals und des empfangenen Signals wird ein Maß für die Ähnlichkeit abgeleitet. Dieses Verfahren erfordert einen hohen Signalverarbeitungsaufwand, wobei Ähnlichkeitskriterien herangezogen werden, um eine Entscheidung über die Echoeigenschaft eines Signals zu treffen. Die Entscheidungssicherheit ist folglich relativ gering.

Der Erfindung liegt die Aufgabe zugrunde, die Zuverlässigkeit der Echoerkennung zu verbessern, wobei ein möglichst geringer Speicher- und Rechenaufwand anzustreben ist.

Die Aufgabe wird bei einem gattungsgemäßen Verfahren dadurch gelöst, dass aus dem von einem Teilnehmer gesendeten Signal und dem bei dem Teilnehmer empfangenen Signal in äquidistanten zeitlichen Abständen die Vorzeichen ermittelt werden, sodass Vorzeichen-Folgen entstehen, die gespeichert und miteinander verglichen werden und dass bei direkter oder durch Invertierung entstehender Übereinstimmung der Vorzeichen-Folgen des empfangenen Signals mit den gesendeten Signal das empfangene Signal als Echo erkannt wird und die Echolaufzeit erreichen wird. Auf diese Weise ist eine sehr sichere Entscheidung möglich, ob es sich um ein Echosignal oder um ein Mischsignal handelt, ohne dass dabei Ähnlichkeitskriterien zu berücksichtigen sind. Die Entscheidungssicherheit ist dabei umso besser, je kleiner die äquidistanten zeitlichen Abstände zur Vorzeichenermittlung gewählt werden. Beispielsweise kann sich ein Signalverlauf des gesendeten Signals ergeben, der durch folgende Blöcke gekennzeichnet ist: 23 mal positives Vorzeichen, 40 mal negatives Vorzeichen, 51 mal positives Vorzeichen, 24 mal negatives Vorzeichen. Nur wenn genau diese Blockeinteilung exakt oder in invertierter Form auch bei dem empfangenen Signal festgestellt wird, handelt es sich um ein Echosignal.

Um aus einer derartigen Übereinstimmungsfeststellung die Echolaufzeit zu ermitteln ist gemäß Anspruch 2 vorgesehen, dass die zeitliche Verschiebung der Vorzeichen-Folgen bzw. der korrespondierenden Vorzeichen-Blöcke ermittelt wird.

Gemäß einer in Anspruch 3 gekennzeichneten vorteilhaften Weiterbildung werden die Vorzeichen-Folgen der gesendeten Signale während eines festgelegten Zeitintervalls ermittelt. Dieses Zeitintervall ist derart groß gewählt, dass währenddessen ein ausreichende Anzahl von Vorzeichen zur eindeutigen Charakterisierung des Signalverlaufs des gesendeten Signals möglich ist. Beispielsweise kann das Zeitintervall durchschnittlich fünf Vorzeichen-Blöcke umfassen, wobei die Blöcke durch eine ausreichende Anzahl von Vorzeichenermittlungen wiedererkennbar charakterisiert sind. Bei einer Beschränkung auf circa fünf Vorzeichen-Blökke sollten während dieses Zeitintervalls mindestens einhundert Vorzeichenermittlungen erfolgen, d.h. das Zeitintervall sollte mindestens das Einhundertfache des äquidistanten zeitlichen Abstandes zwischen zwei Vorzeichenermittlungen betragen. Die Vorzeichen-Folgen der empfangenen Signale werden während der maximalen Echolaufzeit ermittelt. Auf diese Weise ergibt sich trotz verringertem Aufwand eine sichere Identifizierung von Echosignalen. Eine Berechnung der Echolaufzeit als Vorraussetzung für die Echounterdrückung erfolgt natürlich nur, wenn das Empfangssignal eine festeingestellte Schwelle, die über dem Empfangsrauschen liegt, übersteigt. Nach einer Laufzeitmessung sollte bis zum Abreißen des Sendesignals keine weitere Laufzeitmessung erfolgen. Erst mit Beginn des nächsten sprachspezifischen Sendesignals wird während des festgelegten Zeitintervalls die Ermittlung der nächsten Vorzeichen-Folge initiiert.

Eine Echounterdrückungseinrichtung zur Durchführung des Verfahrens ist durch die Merkmale des Anspruchs 4 gekennzeichnet. Vorgesehen sind Mittel zur Bestimmung der Vorzeichen-Folgen, Vergleichsmittel und ein Zähler zur Ermittlung der zeitlichen Verschiebung zwischen direkt oder durch Invertierung übereinstimmender Vorzeichen-Folgen, wobei die zeitliche Verschiebung ein Maß für die Echolaufzeit bildet.

Nachfolgend wird die Erfindung anhand figürlicher Darstellungen näher erläutert. Es zeigen:

Figur 1 eine Übersichtsdarstellung einer echobehafteten Übertragungsstrecke und

Figur 2 Zeitfunktionen eines gesendeten und eines empfangenen Signals zur Veranschaulichung des Verfahrens.

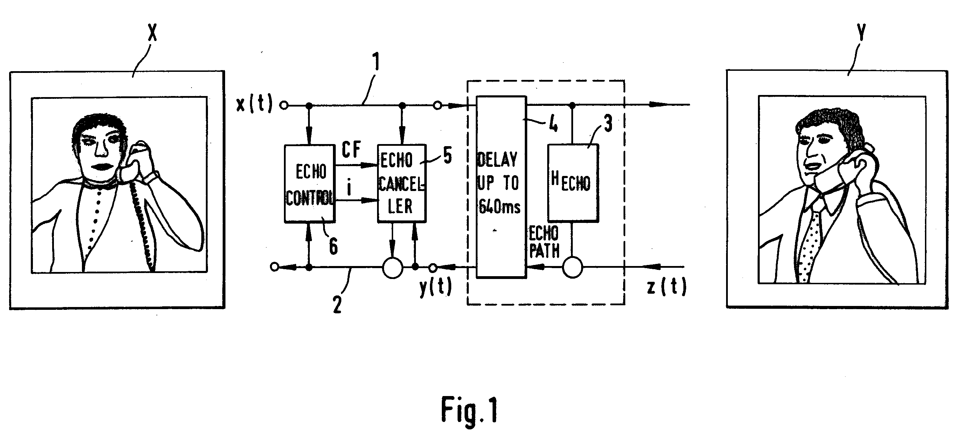

Zur Erläuterung des Sachverhalts zeigt Figur 1 einen lokalen Teilnehmer X, der über einen Sendepfad 1 und einen Empfangspfad 2 mit einem Teilnehmer Y am fernen Ende der Übertragungsstrecke verbunden ist.

Die Eigenschaften der Übertragungsstrecke werden durch einen Echogenerator 3 und durch ein Laufzeitglied 4 symbolisiert. Dem lokalen Teilnehmer X ist eine Echounterdrückungseinrichtung 5 zur Kompensation erkannter Echos zugeordnet. Die Führungsparameter für die Echounterdrückungseinrichtung 5, nämlich die Echolaufzeit i und der Kopplungsfaktor CF werden von einer Steuerschaltung 6 eingestellt. Der Kopplungsfaktor CF gibt das Verhältnis der am Echoempfangsort empfangenen zu der an der Echoquelle gesendeten Signalenergie an.

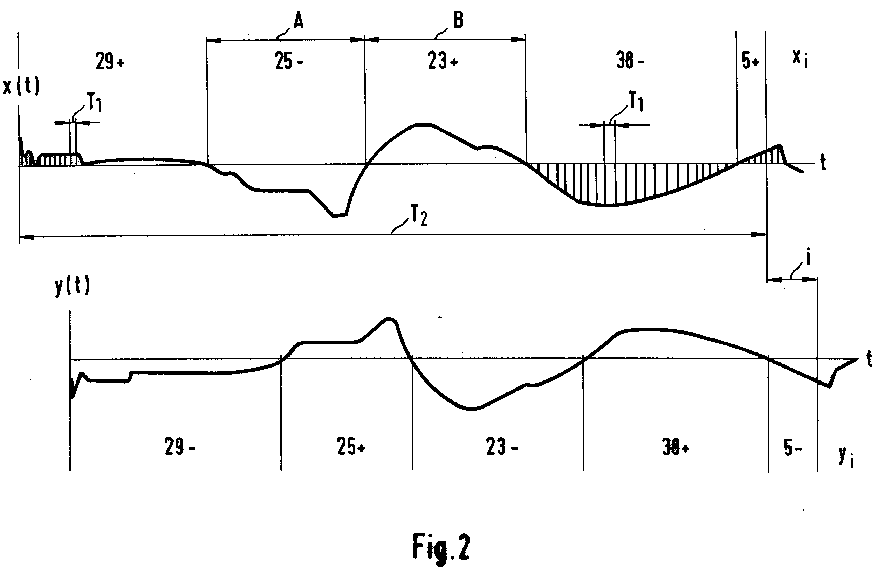

In Figur 2 zeigt die obere Kurve eine Zeitfunktion x(t) eines Sprachsignals des lokalen Teilnehmers X und die untere Kurve die Zeitfunktion y(t) eines vom lokalen Teilnehmer X empfangenen Signals. Es ist ersichtlich, dass die Zeitfunktion y(t) ein vom gesendeten Signal x(t) herrührenden Echo darstellt, das um 180 Grad gegenüber dem gesendeten Signal gedreht und um eine Echolaufzeit i verschoben ist. Für beide Zeitfunktionen x(t) und y(t) werden in äquidistanten zeitlichen Abständen $T_1$ die Vorzeichen einzelner Kurvenpunkte bestimmt. Die ermittelten Vorzeichen werden zu Vorzeichen-Folgen $x_i$ des gesendeten Signals x(t) und $y_i$ des empfangenen Signals y(t) zusammengesetzt. Diese Vorzeichen-Folgen $x_i$ und $y_i$ charakterisieren die jeweilige Länge vorzeichenpositiver und vorzeichennegativer Signalblöcke, von denen zwei mit A und B bezeichnet sind. Wenn sich genau diese Blöcke A, B in invertierter Form bei dem empfangenen Signal y(t) wiederfinden, handelt es sich bei dem empfangenen Signal y(t) um ein Echosignal. Die Laufzeit i des Echosignals ergibt sich aus der zeitlichen Verschiebung gleichartiger Vorzeichen-Folgen $x_i$ und $y_i$ und lässt sich auf einfache Weise mit Hilfe eines Zählers ermitteln. Bei dem in Figur 2 veranschaulichten Ausführungsbeispiel lautet die Vorzeichen-Folge $x_i$ des gesendeten Signals x(t) 29 plus, 25 minus, 23 plus, 38 minus, 5 plus. Diese Vorzeichen-Folge $x_i$ findet sich in invertierter Form bei dem empfangenen Signal y(t) wieder.

Selbstverständlich werden die Zeitkurven x(t) und y(t) in digitalisierter Form ausgewertet, sodass Vorzeichen-Bits zu den Vorzeichen-Folgen $x_i$ und $y_i$ zusammengesetzt werden.

Die Erfindung beschränkt sich nicht auf das vorstehend angegebene Ausführungsbeispiel. Vielmehr ist eine Anzahl von Varianten denkbar, welche auch bei grundsätzlich anders gearteter Ausführung von den Merkmalen der Erfindung Gebrauch machen.

**Patentansprüche**

1. Verfahren zur Echounterdrückung in einem Telekommunikationssystem, bei dem ein Informationsaustausch zwischen einem lokalen Teilnehmer (X) und einem Teilnehmer (Y) am fernen Ende einer Übertragungsstrecke erfolgt und mindestens einem Teilnehmer (X) eine Echounterdrückungseinrichtung (5) zugeordnet ist, deren Parameter unter anderem als Funktion einer Echolaufzeit (i) eingestellt werden,
**dadurch gekennzeichnet, dass** aus dem von einem Teilnehmer (X) gesendeten Signal (x(t)) und dem bei dem Teilnehmer (Y) empfangenen Signal (y(t)) in äquidistanten zeitlichen Abständen($T_1$) die Vorzeichen ermittelt werden, sodass Vorzeichen-Folgen ($x_i$, $y_i$) entstehen, die gespeichert und miteinander verglichen werden und dass bei direkter oder durch Invertierung entstehender Übereinstimmung ($x_i = y_i$ oder $x_i = \bar{y}_i$) der Vorzeichen-Folgen ($x_i$, $y_i$) des empfangenen Signals (y(t)) mit dem gesendeten Signal (x(t)) das empfangene Signal (y(t) als Echo erkannt wird und die Echolaufzeit (i) berechnet wird.

2. Verfahren nach Anspruch 1, dadurch gekennzeichnet, dass die Echolaufzeit (i) aus der zeitlichen Verschiebung direkt oder durch Invertierung übereinstimmender Vorzeichen-Folgen ($x_i$, $y_i$) ermittelt wird.

3. Verfahren nach einem der vorangehenden Ansprüche, dadurch gekennzeichnet, dass die Vorzeichen-Folgen ($x_i$) der gesendeten Signale ($x(t)$) während eines festgelegten Zeitintervalls ($T_2$) ermittelt werden, während die Vorzeichen-Folgen ($y_i$) der empfangenen Signale ($y(t)$) während der maximalen Echolaufzeit ermittelt werden.

4. Echounterdrückungseinrichtung (5) zur Durchführung des Verfahrens nach einem der vorangehenden Ansprüche, gekennzeichnet durch

   • Mittel zur Bestimmung der Vorzeichen-Folgen ($x_i$, $y_i$) gesendeter Signale ($x(t)$) und empfangener Signale ($y(t)$),

   • Vergleichsmittel zur Feststellung direkt oder durch Invertierung übereinstimmender Vorzeichen-Folgen ($x_i$, $y_i$) und

   • einen Zähler zur Ermittlung der zeitlichen Verschiebung zwischen direkt oder durch Invertierung übereinstimmender Vorzeichen-Folgen ($x_i$, $y_i$).

Fig.1

Fig.2